**Europäisches Patentamt**

**European Patent Office**

**Office européen des brevets**

(11) Veröffentlichungsnummer: **0 020 886**
**A1**

# EUROPÄISCHE PATENTANMELDUNG

(21) Anmeldenummer: **80101793.0**

(22) Anmeldetag: **03.04.80**

(51) Int. Cl.³: **B 41 F 13/00**, F 16 M 1/00

(30) Priorität: **19.06.79 DE 2924591**

(71) Anmelder: **M.A.N. - ROLAND Druckmaschinen Aktiengesellschaft, Christian-Pless-Strasse 6-30, D-6050 Offenbach/Main (DE)**

(43) Veröffentlichungstag der Anmeldung: **07.01.81 Patentblatt 81/1**

(72) Erfinder: **Bezler, Wilhelm, Singerstrasse 13 1/2, D-8900 Augsburg (DE)**

(84) Benannte Vertragsstaaten: **AT BE CH DE FR LI NL**

(54) Unterbau für eine Rollen-Rotationsdruckmaschine und Verfahren zu dessen Herstellung.

(57) Bei einem Unterbau für eine Rollen-Rotationsdruckmaschine, bestehend aus einem Papierhalterungs-, Papierantriebs-, Papierzuführ- und Papierwechseleinrichtungen tragenden Gestell (3), auf dem kopfseitig ein Druckwerk gelagert ist, ist das Gestell (3) des Unterbaues aus armiertem Beton hergestellt. In diesem Betongestell ist ein extern vorgefertigtes Metallgerüst (14) mit mehreren, zumindest teilweise nach aussen freiliegenden Trägerelementen (15 bis 19) wie Metallplatten oder dergleichen mit eingeformt, an welchen Trägerelementen die Papierhalterungs-, Papierantriebs-, Papierzuführ- und Papierwechseleinrichtungen, gegebenenfalls auch weitere Aggregate der Druckmaschine gelagert bzw. befestigt sind. Durch dieses Gestell aus armiertem Beton, das auch nach einem einfachen Verfahren herstellbar ist, ergibt sich eine relativ grosse Herstellungskostenersparnis. Da ausserdem die Trägerelemente bereits vor dem Einformen des Metallgerüstes in Beton mit allen Verbindungs- und Befestigungselementen wie Schraubendurchführungen, Gewinde, Gewindebohrungen, Steg-, Lager- oder Befestigungsbolzen ausgestattet sind, fallen am Aufstellungsort in vorteilhafter Weise gegebenenfalls nur noch kleinere Nacharbeiten an.

EP 0 020 886 A1

BEZEICHNUNG GEÄNDERT
siehe Titelseite

PB 2981/1393          - 1 -

## Unterbau für eine Rollen-Rotationsdruckmaschine

Die Erfindung betrifft einen Unterbau für eine Rollen-Rotationsdruckmaschine bestehend aus einem Papierhalterungs-, Papierantriebs-, Papierzuführ- und Papierwechseleinrichtungen tragenden Gestell, auf dem kopfseitig ein Druckwerk gelagert ist. Desweiteren betrifft die Erfindung ein Verfahren zur Herstellung eines einteiligen Gestelles für den Unterbau einer Rollen-Rotationsdruckmaschine, das als Träger für Papierhalterungs-, Papierantriebs-, Papierzuführ- und Papierwechseleinrichtungen sowie eines kopfseitig angeordneten Druckwerkes dient. Weiterhin betrifft die Erfindung ein Verfahren zur Herstellung eines aus mehreren Einzelteilen zusammensetzbaren Gestelles für den Unterbau einer Rollen-Rotationsdruckmaschine, das als Träger für Papierhalterungs-, Papierantriebs-, Papierzuführ- und Papierwechseleinrichtungen sowie eines kopfseitig angeordneten Druckwerkes dient. Die Erfindung betrifft ebenso ein Verfahren zur Erstellung eines Unterbaues für eine Rollen-Rotationsdruckmaschine bestehend aus einem Papierhalterungs-, Papierantriebs-, Papierzuführ- und Papierwechseleinrichtungen tragenden Gestell, auf dem kopfseitig ein Druckwerk gelagert ist.

Bei bekannten Rollen-Rotationsdruckmaschinen besteht das Gestell des Unterbaues entweder aus einer massiv ausgeführten Stahlkonstruktion oder mehreren miteinander verbundenen Gußteilen. Diese Konstruktionen erfordern einen sehr großen Aufwand an zu verarbeitendem Formstahl bzw. Gußmaterial, so daß sie schon von der Materialseite her gesehen sehr teuer sind. In diese Stahl- oder Gußkonstruktionen müssen desweiteren in vielen Einzelarbeitsgängen Befestigungselemente für die Festlegung der durch sie getragenen Papierzuführungsaggregate eingebracht werden. Außerdem erfordern diese Stahl- oder Gußgestellkonstruktionen ein separates Fundament, das auch in eigenen Arbeitsgängen hergestellt werden muß. Insgesamt gesehen sind daher diese bekannten Unterbauten sehr kostspielig.

Es ist daher demgegenüber Aufgabe der Erfindung, einen Unterbau mit einem Gestell für eine Rollen-Rotationsdruckmaschine entsprechend den gattungsgemäßen Merkmalen zu schaffen, der durch Verwendung eines nach einem einfachen Verfahren herstellbaren Gestells sowie aufgrund eines einfachen Unterbau-Erstellungsverfahrens wesentlich billiger als bekannte Lösungen ist und außerdem bauseitig sowie montageseitig am Aufstellungsort keine besonderen Maßnahmen erfordert.

Diese Aufgabe wird dadurch gelöst, daß das Gestell des Unterbaues aus armiertem Beton hergestellt und in diesem ein extern vorgefertigtes Metallgerüst mit mehreren, zumindest teilweise nach außen freiliegenden Trägerelementen, wie Metallplatten oder dergleichen, eingeformt ist, an denen die Papierhalterungs-, Papierantriebs-, Papierzuführ- und Papierwechseleinrichtungen, gegebenenfalls auch weitere Aggregate der Druckmaschine, gelagert bzw. befestigt sind.

0020886

Eine weitere Lösung kann durch folgende Verfahrensschritte erzielt werden:

a) Herstellung eines Metallgerüstes aus mehreren
Längs- und Querstreben sowie von diesen wegführenden Stütz- und Verbindungsstreben und daran
anzubringenden Trägerelementen, wie Metallplatten
oder dergleichen, für die spätere Befestigung zumindest von Aggregaten der Papierhalterungs-, Papierzuführ-, Papierantriebs- und Papierwechseleinrichtungen,

b) Einbringung dieses vorgefertigten Metallgerüstes
zusammen mit Armierungsmaterial,wie Stahlmattengeflecht, in eine ebenfalls vorgefertigte Betonverschalung,

c) Ausgießen der Betonverschalung bei gleichzeitigem
Umgießen des darin eingelegten Metallgerüstes und
des Armierungsmaterials mit Beton.

Desweiteren kann die Aufgabe durch folgende Verfahrensschritte gelöst werden:

a) Herstellung eines mehrteiligen Metallgerüstes aus
mehreren Längs- und Querstreben sowie Stütz- und
Verbindungsstreben und daran anzubringenden Trägerelementen, wie Metallplatten oder dergleichen,
für die spätere Befestigung zumindest von Aggregaten der Papierhalterungs-, Papierzuführ-, Papierantriebs- und Papierwechseleinrichtungen,

b) Einbringung der Teile des Metallgerüstes zusammen mit Armierungsmaterial, wie Stahlmattengeflecht in der Außenform der Gestelleinzelteile
entsprechende Betonverschalungen,

c) Ausgießen der Betonverschalungen bei gleichzeitigem Umgießen der eingelegten Metallgerüstteile und des Armierungsmaterials mit Beton,

d) Zusammensetzen der vorgefertigten Einzelteile des Gestells und Ausgießen der an den Verbindungsstellen derselben verbleibenden Spalte mit einer Füllmasse.

Desweiteren ist die Aufgabe durch folgende Verfahrensschritte lösbar:

a) Herstellung des Gestells des Unterbaues aus armiertem Beton mit eingelagertem Metallgerüst mit mehreren, zumindest teilweise nach außen freiliegenden Trägerelementen, wie Metallplatten oder dergleichen,

b) Anbringung der Aggregate der Papierhalterungs-, Papierzuführ-, Papierantriebs- und Papierwechseleinrichtungen sowie eventuell weitere Aggregate der Druckmaschine durch Verbindung derselben bzw. deren Lagerelemente mit den nach außen freiliegenden Trägerelementen des im Beton eingeformten Metallgerüstes.

Durch die Verwendung von armiertem Beton für das Gestell des Unterbaues ergibt sich für diese Baugruppe der Rollen-Rotationsdruckmaschine gegenüber den bekannten Stahl- oder Gußkonstruktionen aufgrund einfacherer und billigerer Herstellungsmaterialien, die auch eine einfache Verarbeitung bei der Herstellung erlauben, eine relativ große Herstellungskostenersparnis. Das eingeformte Metallgerüst besitzt an sich keine tragende Funktion und dient in vorteilhafter Weise zur räumlich lagerichtigen Fixierung der an ihm angeordneten Trägerelemente innerhalb der Betonmasse des Ge

stells sowohl im Festzustand als auch innerhalb der Betonverschalung beim Herstellungsvorgang. Aufgrund der Tatsache, daß die Trägerelemente bereits vor dem Einformen des Metallgerüstes im Beton mit allen Verbindungs- und Befestigungselementen, wie Schraubendurchführungen, Gewinde, Gewindebohrungen, Steh-, Lager- oder Befestigungsbolzen ausgestattet sind, fallen am Aufstellungsort in vorteilhafter Weise gegebenenfalls nur noch kleinere Nacharbeiten an. Das Gestell erfordert aufgrund der erfindungsgemäßen Bauweise kein eigenes Betonfundament am Aufstellungsort, da dieses in Form der Bodenplatte mit im Gestell integriert ist. Letzteres erspart somit auch Baumaßnahmen und Baukosten am Aufstellort. Außerdem ist als integrales Bestandteil am Gestell kopfseitig eine Trägerplatte angeformt, auf der das Druckwerk gelagert und befestigt ist. Es entfallen daher bei der erfindungsgemäßen Lösung somit auch das Einziehen einer spearaten Zwischendecke zwischen Unterbau und Druckwerk sowie ein Abstützen derselben durch zugeordnete Stützpfeiler. Der Wegfall dieser Stützpfeiler reduziert ebenfalls die am Aufstellort notwendigen Baumaßnahmen und Baukosten. Außerdem wird durch den Wegfall dieser Stützpfeiler im Raum um den Unterbau Platz gewonnen, so daß das Umfeld des Unterbaues besser für Transport und Lagerzwecke ausnutzbar ist.

Nachstehend ist die Erfindung anhand zweier in der Zeichnung dargestellter Ausführungsbeispiele näher beschrieben. Es zeigen:

Fig. 1    eine Seitenansicht eines Gestells des Unterbaues einer Rollen-Rotationsdruckmaschine mit kopfseitig angeordnetem Druckwerk nach einem ersten Ausführungsbeispiel,

Fig. 2            eine Vorderansicht der Anordnung gemäß Fig. 1,

Fig. 3            eine Vorderansicht gemäß Fig. 2 mit
                  vollständigem Unterbau und kopfseitig angeordnetem Druckwerk,

Fig. 4            ein zweites Ausführungsbeispiel mit
                  einem in Vorderansicht und Explosiondarstellung gezeigten Gestell
                  des Unterbaues.

In den Figuren sind gleiche oder entsprechende Bauteile mit gleichen Bezugszeichen versehen.

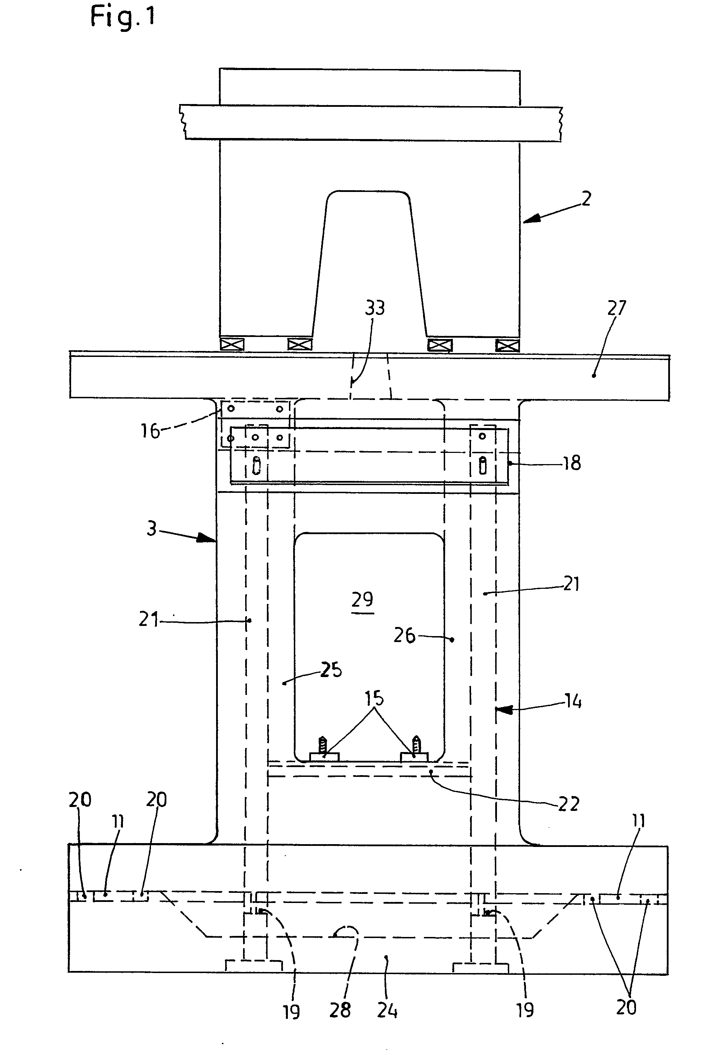

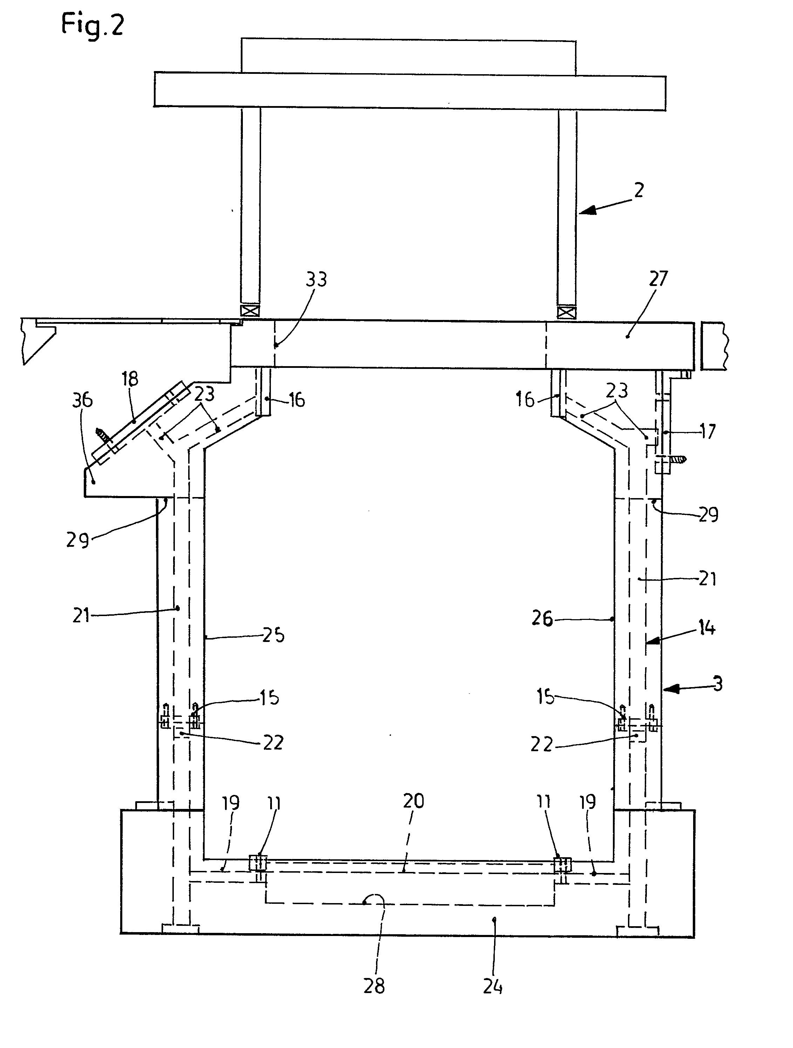

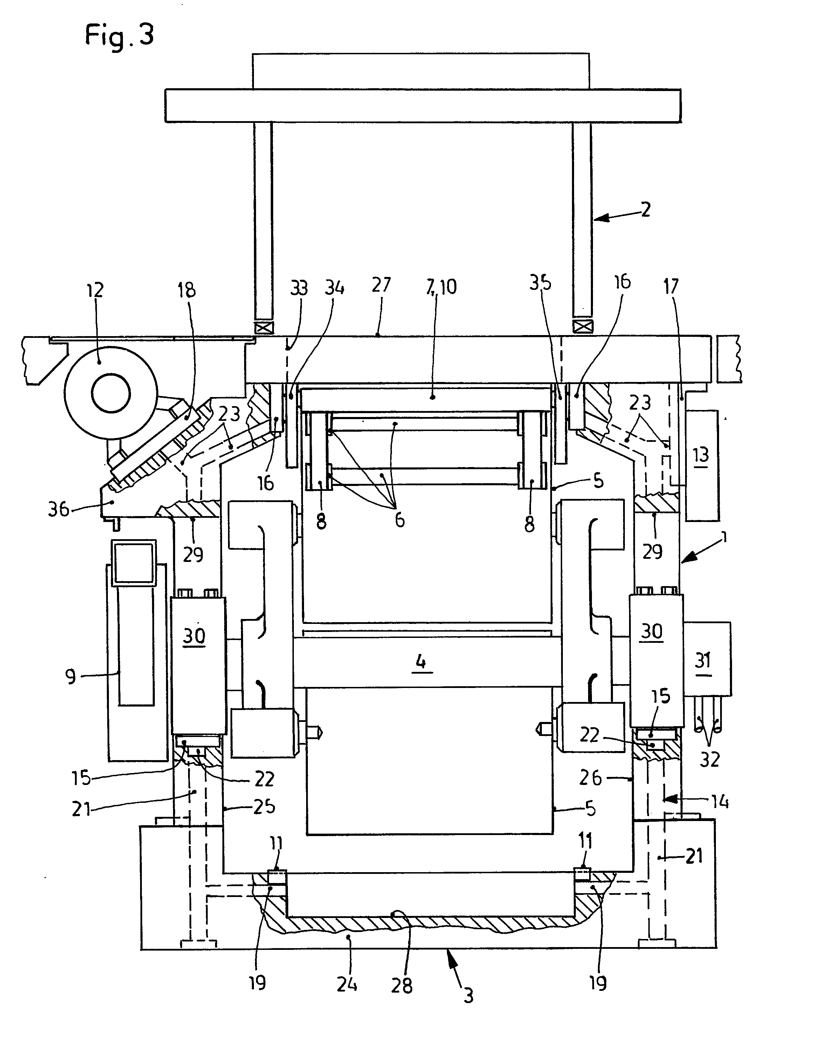

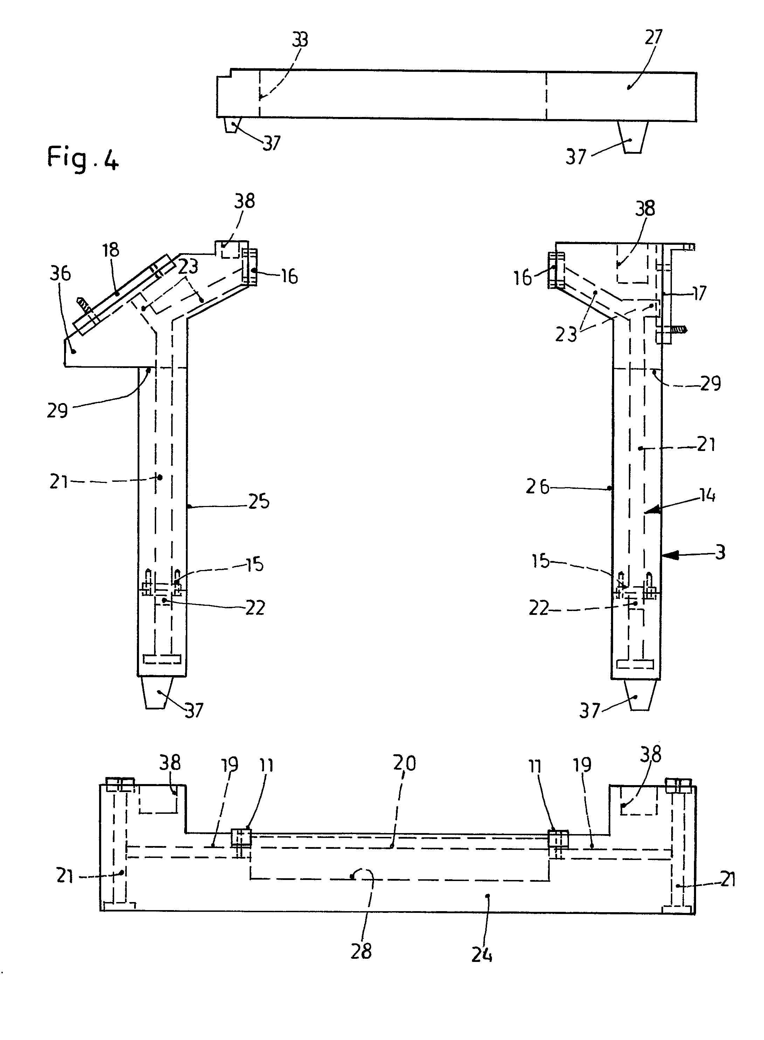

Eine Rollen-Rotationsdruckmaschine besteht aus einem
von einem Unterbau 1 getragenen Druckwerk 2. Letzteres ist in den Fig. 1 bis 3 nur schematisch dargestellt.
Der Unterbau 1 besteht aus einem Gestell 3, auf dem
kopfseitig das Druckwerk 2 gelagert und befestigt ist.
Das Gestell dient außerdem auch als Träger für Papierhalterungseinrichtungen, Papierantriebseinrichtungen,
Papierzuführeinrichtungen, Papierwechseleinrichtungen
und gegebenenfalls weiterer Aggregate der Rollen-Rotationsdruckmaschine. Diese Baugruppen sind in Fig. 3
schematisch in Einbaulage gezeigt, während die Fig. 1
und 2 sich auf die Darstellung des Gestelles 3 mit
dem darauf gelagerten Druckwerk 2 sowie Fig. 4 nur auf
die Darstellung des Gestelles 3 beschränken.

Als Papierhalterungseinrichtungen sind ein dem Aufbau
nach an sich bekannter Rollendrehstern 4 als Halter
für drei Papierrollen 5 und dessen Lager-, Halte- und
Bremseinrichtungen bezeichnet. Zu den Papierantriebseinrichtungen sind Lager- und Führungselemente 6 sowie
Antriebselemente 7 für Antriebsgurte 8 zu zählen.

Letztere sind Teil der Papierzuführeinrichtungen, die desweiteren aus Transportrollen, Umlenkrollen oder dergleichen Papierführungselementen bestehen. Zu den Papierzuführeinrichtungen sind desweiteren auch innerhalb des Unterbaues angeordnete Papierrollentransportschienen 11 zu zählen, auf denen mittels nicht dargestellter Transportschlitten neue Papierrollen an den Rollendrehstern 4 heranführbar sind. Zu den Papierwechseleinrichtungen sind sowohl ein Getriebemotor 9 zur Verschwenkung des Rollendrehsterns 4 als auch ein mit den Antriebselementen 7 für die Antriebsgurte 8 zu einer Baugruppe vereinigter, dem Aufbau nach an sich bekannter Autopastermechanismus 10 zu zählen. Wie in Fig. 3 gezeigt, ist als weiteres Aggregat der Rollen-Rotationsdruckmaschine am Gestell 3 ein Antriebsmotor 12 für den Antrieb des Druckwerkes, dessen Antriebsübertragungselemente nicht dargestellt sind, sowie ein Schaltschrank 13 mit elektrischen, elektronischen, pneumatischen und gegebenenfalls weiteren Steuerelementen befestigt.

Erfindungsgemäß ist das Gestell 3 des Unterbaues 1 aus armiertem Beton hergestellt, in dem neben Armierungsmaterial, wie beispielsweise Stahlmattengeflecht, ein extern vorgefertigtes Metallgerüst 14 mit mehreren, zumindest teilweise nach außen freiliegenden Trägerelementen eingeformt ist. Als Trägerelemente sind im gezeigten Ausführungsbeispiel als Lagerschilde ausgebildete, vorgefertigte Stahlplatten 15, 16, 17 und 18 vorgesehen, an denen, wie in der Zeichnung schematisch angedeutet, alle Befestigungselemente für die anzubauenden Aggregate, wie Schraubendurchführungen, Gewinde oder Gewindebohrungen, Steh-, Lager- oder Befestigungsbolzen bereits angebracht sind. Als weitere Trägerelemente sind im vorliegenden Ausführungsbeispiel Streben 19 aus Profilstahl vorgesehen, an deren äußeren freiliegenden Enden die beiden durch mehrere Traversen 20 miteinander in festem gleichbleibenden Abstand verbundenen Papierrollentransportschienen 11 befestigt sind.

Das Metallgerüst 14 ist beim Ausführungsbeispiel gemäß Fig. 1 bis 3 einstückig ausgebildet und besteht aus mehreren miteinander durch Schweißen oder Verschraubung verbundenen Längsstreben 21 und Querstreben 22 sowie Stütz- und Verbindungsstreben 23 aus Profilstahl, an denen die Trägerelemente 15, 16, 17, 18 und 19 ebenfalls durch Schweißen oder Verschraubung angebracht sind. Als Profil ist bei den Streben beispielsweise ein U-Profil verwendet; alternativ hierzu könnten die Streben jedoch auch aus Winkel-, T-, Doppel-T- oder dergleichen Profil hergestellt sein.

Das Metallgerüst 14 besitzt innerhalb des Gestelles 3 keine tragende Funktion, da die statisch notwendige Festigkeit durch das im Beton außerdem eingelagerte Armierungsmaterial erbracht ist. Das Metallgerüst dient zur räumlich lagerichtigen Fixierung der Trägerelemente innerhalb einer Betonverschalung während des Ausgießens derselben mit Beton.

Das Gestell 3 ist beim Ausführungsbeispiel gemäß Fig. 1 bis 3 einstückig ausgebildet und besteht aus einer Bodenplatte 24, zwei auf dieser senkrecht stehenden Seitenwänden 25 und 26 sowie einer hierauf kopfseitig angeordneten Trägerplatte 27, auf der das Druckwerk 2 ohne Verbindung zum Metallgerüst 14 gelagert und befestigt ist. Die Bodenplatte 24 dient nicht nur als Grund- und Trägerplatte für die anderen Wände, sondern auch als Fundament für den gesamten Überbau. Die Trägerplatte 27 dient als Aufstellebene für das darauf sitzende Druckwerk 2 und überragt dieses seitlich mit hinreichend großem Abstand, wobei der überstehende Flächenbereich an ihrer Oberseite als Lauffläche für das Bedienungspersonal der Rollen-Rotationsdruckmaschine dient.

Bodenplatte 24 und Trägerplatte 27 sowie die beiden Seitenwände 25 und 26 sind jeweils zueinander im wesentlichen parallel verlaufend angeordnet. Die Bodenplatte 24 besitzt ein U-förmiges Profil und unterhalb des Rollendrehsterns 4 eine Schwenkwanne 28, längs deren Breitseiten die angrenzenden Papierrollentransportschienen 11 verlaufen. Die beiden Seitenwände 25 und 26 besitzen jeweils einen Durchbruch 29, in dessen Innenraum jeweils ein Lagerbock 30 angeordnet ist. Die beiden Lagerböcke 30 tragen den Rollendrehstern 4, den Getriebemotor 9 und ein Drehdurchführungsaggregat 31, dessen Zuleitungen 32 in nicht dargestellter Weise mit den zugehörigen, im Schaltschrank 13 angeordneten Steuerelementen verbunden sind. In der Trägerplatte 27 ist ein Durchbruch 33 eingeformt, durch den die von einer Rolle zum Druckwerk 2 ablaufende Papierbahn hindurchgeführt ist.

Wie aus den Figuren ersichtlich, sind von den Trägerelementen 15 bis 19 am Metallgerüst 14 wenigstens die für die Befestigung des zugehörigen Aggregates notwendigen Flächenteile nicht in Beton eingebettet und freiliegend von außen zugänglich. An den Stahlplatten 15, die an den Querstreben 22 befestigt sind, sind die Lagerböcke 30 befestigt. An den Stahlplatten 16 sind zwei Platten 34 und 35 befestigt, zwischen denen die Antriebsgurte 8, deren Lager- und Antriebselemente 6 und 7 sowie der Autopastermechanismus 10 angeordnet sind. Diese Bauteile werden zusammen mit den beiden Platten 34 und 35 außerhalb des Unterbaues vormontiert und als komplette Einschubeinheit in das Gestell 3 eingesetzt und dort an den Stahlplatten 16 befestigt. Die Metallplatte 17 dient zur Befestigung des Schaltschrankes 13 und außerdem zur Befestigung einer nicht dargestellten Verkleidung. Auf der Stahlplatte 18 ist der Antriebsmotor 12 für das Druckwerk 2 befestigt. Aus Platzgründen ist die Stahlplatte 18 dabei gegenüber der Seitenwand 25 auf einem Vorsprung 36 schrägliegend angeordnet.

Das in Fig. 4 als Variante der Lösung nach den Fig. 1 bis 3 gezeigte Gestell 3 besteht aus mehreren vorgefertigten Fertigbeton-Einzelteilen, nämlich der so hergestellten Bodenplatte 24, den beiden Seitenwänden 25 und 26 sowie der Trägerplatte 27. In zusammengebauter Lage besitzt dieses derart zusammengesetzte Gestell die gleiche Form wie jenes in den Fig. 1 bis 3 gezeigte. An einigen dieser Fertigbeton-Einzelteile, hier der Trägerplatte 27 sowie den beiden Seitenwänden 25 und 26, sind an der Unterseite Fixierungsvorsprünge 37 mit angeformt, die in lagemäßig zugeordnete und formmäßig angepaßte Fixierungsvertiefungen 38 der mit ihnen zu verbindenden Teile, hier angeordnet jeweils an der Oberseite der beiden Seitenwände 25 und 26 sowie der Bodenplatte 24, eintauchen. Sofern erforderlich, können aus den Fixierungsvorsprüngen 37 und den Fixierungsvertiefungen 38 Teile des Armierungsmaterials hervorragen. Die zwischen den Fixierungsvorsprüngen 37 und den Fixierungsvertiefungen 38 nach Zusammenfügung der Gestelleinzelteile verbleibenden Spalte sind mit einer Füllmasse, beispielsweise Spezialbeton, ausgegossen. Diese Gestellkonstruktion erfordert ein mehrteiliges Metallgerüst 14, wobei, wie in Fig. 4 gezeigt, ein Teil desselben in der Seitenwand 25, ein weiteres Teil in der Seitenwand 26 und ein anderes Teil in der Bodenplatte 24 mit eingeformt ist. Der weitere Aufbau des Metallgerüstes entspricht jenem der Fig. 1 bis 3.

Das in den Fig. 1 bis 3 dargestellte Gestell ist erfindungsgemäß durch folgende Verfahrensschritte herstellbar. In einem ersten Verfahrensschritt wird das Metallgerüst 14 hergestellt, wobei zunächst die vorgeschnittenen Längsstreben 21 und Querstreben 22 sowie die Stütz- und Verbindungsstreben 23 miteinander verschweißt oder verschraubt und anschließend die Trägerelemente 15 bis 19 angebracht werden. Die Trägerelemente sind dabei bereits vor Befestigung an den Streben mit allen Verbindungs- und Befestigungselementen für die daran später zu befestigenden Aggregate bestückt worden. Im nächsten Verfahrensschritt wird das so vorgefertigte Metallgerüst zusammen mit dem Armierungsmaterial - Stahlmattengeflecht - in eine vorgefertigte Betonverschaltung eingebracht, die dann im nächsten Verfahrensschritt mit Beton ausgegossen wird.

Das in Fig. 4 gezeigte Gestell ist erfindungsgemäß durch folgende Verfahrensschritte herstellbar. In einem ersten Verfahrensschritt wird das mehrteilige Metallgerüst 14 hergestellt, wobei dessen Einzelgerüstteile aus vorgeschnittenen Längs- und Querstreben 21 bzw. 22 sowie den Stütz- und Verbindungsstreben 23, die durch Schweißen oder Verschraubung miteinander verbunden werden, sowie den anschließend daran anzubringenden Trägerelementen 15 bis 19 erstellt werden. Die Trägerelemente sind auch hier bereits vor der Befestigung an den Streben mit allen Verbindungs- und Befestigungelementen für die später daran anzubringenden Aggregate ausgestattet worden. Im nächsten Verfahrensschritt werden dann diese Einzelgerüstteile zusammen mit Armierungsmaterial in eine Betonverschalung für das entsprechende Gestellteil eingebracht.

Im weiteren Verfahrensschritt wird die Betonverschalung mit Beton ausgegossen. Anschließend werden diese
fertigen Gestelleinzelteile zusammengesetzt und die
rings um die Verbindungsstellen verbleibenden Spalte
mit Füllmasse ausgegossen.

Dieses nach den vorbeschriebenen Verfahren hergestellte Gestell 3 wird dann erfindungsgemäß im Rahmen der
Erstellung des Unterbaues durch Befestigung der eingangs beschriebenen Aggregate der Papierhalterungs-,
Papierantriebs-, Paierzuführ- und Papierwechseleinrichtungen sowie weiterer Aggregate der Rollen-Rotationsdruckmaschine an den nach außen freiliegenden
Teilen der Trägerelemente des im Gestell eingeformten Metallgerüstes zu einem vollständigen Unterbau
ergänzt. Diese Anbringung der besagten Aggregate am
Gestell 3 kann am Aufstellort oder aber auch beim Hersteller der Rollen-Rotationsdruckmaschine erfolgen;
im zuletzt genannten Fall bekommt der Abnehmer einen
kompletten Unterbau geliefert, auf dem dann am Aufstellort nurmehr das Druckwerk montiert werden muß.
Sofern für eine Druckanlage mehrere Druckwerke 2 erforderlich sind, werden deren Anzahl entsprechend
viele der erfindungsgemäßen Unterbauten hintereinander angeordnet.

Abschließend sei noch darauf hingewiesen, daß die Erfindung nicht auf die spezielle Ausführungsform des
in den Figuren dargestellten Unterbaues, dessen Gestell, dessen eingelagerten Metallgerüstes und der
daran angeordneten Trägerelemente beschränkt ist.

Patentansprüche:

1. Unterbau für eine Rollen-Rotationsdruckmaschine bestehend aus einem Papierhalterungs-, Papierantriebs-, Papierzuführ- und Papierwechseleinrichtungen tragenden Gestell, auf dem kopfseitig ein Druckwerk gelagert ist, dadurch gekennzeichnet, daß das Gestell (3) des Unterbaues (1) aus armiertem Beton hergestellt und in diesem ein extern vorgefertigtes Metallgerüst (14) mit mehreren, zumindest teilweise nach außen freiliegenden Trägerelementen (15, 16, 17, 18, 19) wie Metallplatten oder dergleichen eingeformt ist, an denen die Papierhalterungs-, Papierantriebs-, Papierzuführ- und Papierwechseleinrichtungen, gegebenenfalls auch weitere Aggregate der Druckmaschine, gelagert bzw. befestigt sind.

2. Unterbau nach Anspruch 1, dadurch gekennzeichnet, daß das Metallgerüst (14) aus mehreren miteinander durch Schweißen und/oder Verschraubung verbundenen Längs- und Querstreben (21, 22) sowie Stütz- und Verbindungsstreben (23) besteht, an denen die Trägerelemente (15, 16, 17, 18, 19) befestigt sind.

3. Unterbau nach Anspruch 1 oder 2, dadurch gekennzeichnet, daß an den Trägerelementen (15, 16, 17, 18, 19) des vorgefertigten Metallgerüstes (14) bereits vor Einbettung desselben im Beton alle Verbindungs- und Befestigungselemente wie Schraubendurchführungen, Gewinde oder Gewindebohrungen, Steh-, Lager- oder Befestigungsbolzen angebracht sind.

4. Unterbau nach Anspruch 1 oder 2, dadurch gekennzeichnet, daß die Streben (21, 22, 23) des Metallgerüstes (14) aus Profilstahl mit Winkel-, T-, Doppel-T-, U- oder dergleichen Profil bestehen.

5. Unterbau nach einem oder mehreren der vorhergehenden Ansprüche, dadurch gekennzeichnet, daß am Metallgerüst (14) Metallplatten (15) oder Lagerschilde zur Befestigung zweier, einen Papierrollendrehstern (4) und dessen Antrieb (9) tragenden Lagerböcke (30), ferner Metallplatten (16) zur Befestigung einer Funktionseinheit bestehend aus Rollenantriebsgurten (8), deren Lagerelementen (6) und Antrieb (7) und Autopastermechanismus (10), desweiteren eine Metallplatte (18) zur Befestigung eines Antriebsmotors (12) für das Druckwerk (2), außerdem eine Metallplatte (17) zur Befestigung wenigstens eines, Steuerelemente aufweisenden Schaltschrankes (13), sowie Streben (19) zur Halterung von Papierrollentransportschienen (11) angeordnet sind.

6. Unterbau nach einem der vorhergehenden Ansprüche, dadurch gekennzeichnet, daß dessen Gestell (3) aus Stahlbeton besteht, bei dem als Armierung um das Metallgerüst (14) angeordnetes und in der Betonmasse eingebettetes Stahlmattengeflecht verwendet ist.

7. Unterbau nach einem oder mehreren der vorhergehenden Ansprüche, dadurch gekennzeichnet, daß das Gestell (3) einstückig ausgebildet ist.

8. Unterbau nach einem oder mehreren der vorhergehenden Ansprüche, dadurch gekennzeichnet, daß dessen Gestell (3) aus einer Bodenplatte (24), zwei Seitenwänden (25, 26) und einer kopfseitig angeordneten Trägerplatte (27) für das darauf gelagerte und befestigte Druckwerk (2) besteht und diese Gestellteile Einformungen (28) und/oder Durchbrüche
(29, 33) aufweisen.

9. Unterbau nach einem oder mehreren der Ansprüche 1
bis 8, dadurch gekennzeichnet, daß das Gestell (3)
aus mehreren vorgefertigten Fertigbeton-Einzelteilen, nämlich der Bodenplatte (24), den beiden Seitenwänden (25, 26) und der Trägerplatte (27) besteht, wobei einige dieser Einzelteile Fixierungsvorsprünge (37) aufweisen, die in entsprechend angepaßte Fixierungsvertiefungen (38) der mit ihnen
zu verbindenden Teile eintauchen und die dazwischenliegenden Spalte mit einer Füllmasse ausgegossen sind.

10. Unterbau nach Anspruch 7, dadurch gekennzeichnet,
daß die Bodenplatte (24) des Gestells (3) gegenüber
der kopfseitigen Trägerplatte (27) sowie die beiden Seitenwände (25 und 26) zueinander im wesentlichen parallel verlaufend angeordnet sind.

11. Unterbau nach einem oder mehreren der vorhergehenden Ansprüche, dadurch gekennzeichnet, daß von den
Trägerelementen (15, 16, 17, 18, 19) am Metallgerüst (14) wenigstens die für die Befestigung des
zugehörigen Aggregates notwendige Fläche nicht in
Beton eingebettet und freiliegend von außen zugänglich ist.

12. Verfahren zur Herstellung eines einteiligen Gestelles für den Unterbau einer Rollen-Rotationsdruckmaschine, das als Träger für Papierhalterungs-,
Papierantriebs-, Papierzuführ- und Papierwechseleinrichtungen sowie eines kopfseitig angeordneten
Druckwerkes dient, gekennzeichnet durch folgende
Verfahrensschritte:

a) Herstellung eines Metallgerüstes (14) aus mehreren Längs- und Querstreben (21, 22) sowie von diesen wegführenden Stütz- und Verbindungsstreben (23) und daran anzubringenden Trägerelementen (15, 16, 17, 18, 19) wie Metallplatten oder dergleichen für die spätere Befestigung zumindest von Aggregaten der Papierhalterungs-, Papierzuführ-, Papierantriebs- und Papierwechseleinrichtungen,

b) Einbringung dieses vorgefertigten Metallgerüstes (14) zusammen mit Armierungsmaterial,wie Stahlmattengeflecht in eine ebenfalls vorgefertigte Betonverschaltung,

c) Ausgießen der Betonverschalung bei gleichzeitigem Umgießen des darin eingelegten Metallgerüstes (11) und des Armierungsmaterials mit Beton.

13. Verfahren zur Herstellung eines aus mehreren Einzelteilen zusammensetzbaren Gestelles für den Unterbau einer Rollen-Rotationsdruckmaschine, das als Träger für Papierhalterungs-, Papierantriebs-, Papierzuführ- und Papierwechseleinrichtungen sowie eines kopfseitig angeordneten Druckwerkes dient, gekennzeichnet durch folgende Verfahrensschritte:

a) Herstellung eines mehrteiligen Metallgerüstes (14) aus mehreren Längs- und Querstreben (21, 22) sowie Stütz- und Verbindungsstreben (23) und daran anzubringenden Trägerelementen (15, 16, 17, 18, 19), wie Metallplatten oder dergleichen, für die spätere Befestigung zumindest von Aggregaten der Papierhalterungs-, Papierzuführ-, Papierantriebs- und Papierwechseleinrichtungen,

b) Einbringung der Teile des Metallgerüstes (14)
zusammen mit Armierungsmaterial,wie Stahlmattengeflecht,in der Außenform der Gestelleinzelteile entsprechende Betonverschalungen,

c) Ausgießen der Betonverschalungen bei gleichzeitigem Umgießen der eingelegten Metallgerüstteile und des Armierungsmaterials mit
Beton,

d) Zusammensetzen der vorgefertigten Einzelteile
des Gestells (3) und Ausgießen der an den Verbindungsstellen derselben verbleibenden Spalte mit einer Füllmasse.

14. Verfahren zur Erstellung eines Unterbaues für eine
Rollen-Rotationsdruckmaschine bestehend aus einem
Papierhalterungs-, Papierantriebs-, Papierzuführ-
und Papierwechseleinrichtungen tragenden Gestell,
auf dem kopfseitig ein Druckwerk gelagert ist, gekennzeichnet durch folgende Verfahrensschritte:

a) Herstellung des Gestells (3) des Unterbaues (1)
aus armiertem Beton mit eingelagertem Metallgerüst (14) mit mehreren, zumindest teilweise
nach außen freiliegenden Trägerelementen (15,
16, 17, 18, 19), wie Metallplatten oder dergleichen,

b) Anbringung der Aggregate der Papierhalterungs-,
Papierzuführ-, Papierantriebs- und Papierwechseleinrichtungen sowie eventuell weitere Aggregate der Druckmaschine durch Verbindung derselben bzw. deren Lagerelemente mit den nach
außen freiliegenden Trägerelementen (15, 16,
17, 18, 19) des im Beton eingeformten Metallgerüstes (14).

15. Verfahren nach Anspruch 14, dadurch gekennzeichnet, daß beim Verfahrensschritt a) folgende Einzelverfahrensschritte durchgeführt werden:

a.a) Herstellung eines Metallgerüstes (14) aus mehreren Längs- und Querstreben (21, 22) sowie von diesen wegführenden Stütz- und Verbindungsstreben (23) und den anzubringenden Trägerelementen (15, 16, 17, 18, 19);

a.b) Einbringung dieses extern vorgefertigten Metallgerüstes (14) zusammen mit Armierungsmaterial, wie Stahlmattengeflecht, in eine ebenfalls vorgefertigte Betonverschalung,

a.c) Ausgießen der Betonverschalung bei gleichzeitigem Umgießen des darin eingelegten Metallgerüstes (14) sowie des Armierungsmaterials mit Beton.

16. Verfahren nach Anspruch 14, dadurch gekennzeichnet, daß beim Verfahrensschritt a) zum Erhalt eines mehrteiligen Gestelles folgende Einzelverfahrensschritte durchführbar sind:

a.a) Herstellung eines mehrteiligen Metallgerüstes (14) aus mehreren Längs- und Querstreben (21, 22) sowie Stütz- und Verbindungsstreben (23) und daran anzubringenden Trägerelementen (15, 16, 17, 18, 19), wie Metallplatten oder dergleichen, für die spätere Befestigung zumindest von Aggregaten der Papierhalterungs-, Papierzuführ-, Papierantriebs- und Papierwechseleinrichtungen,

a.b) Einbringung der Teile des Metallgerüstes (14) zusammen mit Armierungsmaterial, wie Stahlmattengeflecht,in der Außenform der Gestelleinzelteile entsprechende Betonverschalungen,

a.c) Ausgießen der Betonverschalungen bei gleichzeitigem Umgießen der eingelegten Metallgerüstteile und des Armierungsmaterials mit Beton,

a.d) Zusammensetzen der vorgefertigten Einzelteile des Gestells (3) und Ausgießen der an den Verbindungsstellen derselben verbleibenden Spalte mit einer Füllmasse.

17. Verfahren nach den Ansprüchen 15 und 16, dadurch gekennzeichnet, daß beim Verfahrensschritt a.a) die vorgefertigten Streben (21, 22, 23) des Metallgerüstes (14) durch Schweißen oder Schrauben miteinander verbunden und anschließend an diese die vorgefertigten, d. h. mit Verbindungs- und Befestigungselementen, wie Schraubendurchführungen, Gewinden oder Gewindebohrungen, Steg-, Lager- oder Befestigungsbolzen versehenen Trägerelemente (15, 16, 17, 18, 19) angebracht werden.

Fig.1

Fig.2

0020886

Fig.3

Fig.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 880 143 (MULLER)<br>* Das ganze Dokument *<br><br>-- | 1 |
| | FR - A - 989 314 (THOMASSET)<br>* Das ganze Dokument *<br><br>-- | 1,12 |
| | MACHINERY AND PRODUCTION ENGINEERING, Band 116, Nr. 2999, 6. Mai 1970,<br>N.A. BUTTERWORTH: "Concrete in machine tools", Seiten 703-709<br>* Seiten 703-709 *<br><br>-- | 1,12 |
| A | US - A - 2 133 459 (LIVINGSTON)<br>* Das ganze Dokument *<br><br>----- | 1 |

**KLASSIFIKATION DER ANMELDUNG (Int. Cl.³)**

B 41 F 13/00
F 16 M  1/00

**RECHERCHIERTE SACHGEBIETE (Int. Cl.³)**

B 41 F
F 16 M
B 65 H

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-09-1980 | LONCKE |

EPA form 1503.1  06.78